# EUROPÄISCHE PATENTANMELDUNG

(11) **EP 2 378 386 A1**
(43) Veröffentlichungstag der Anmeldung: **19.10.2011**
(21) Anmeldenummer: 10160333.0
(22) Anmeldetag: 19.04.2010
(51) Int. Cl.: G06F 1/16, G06F 3/048

(54) **Eingabeeinrichtung zur Eingabe von Steuerbefehlen für die Steuerung eines auf einem Datenverarbeitungsgerät ablaufenden Datenverarbeitungsprogrammes**

(71) Anmelder: Steinberg Media Technologies GmbH, 22143 Hamburg (DE)
(72) Erfinder: Simmerlein, Frank, 21033 Hamburg (DE)
(74) Vertreter: Raffay & Fleck

(57) **Zusammenfassung**

Um eine Eingabeeinrichtung zur Eingabe von Steuerbefehlen für die Steuerung eines auf einem Datenverarbeitungsgerät ablaufenden Datenverarbeitungsprogrammes, insbesondere eines Musikaufnahme-, Musikwiedergabe- und/oder Musikbearbeitungsprogrammes, mit einem von einem Prozessor des Datenverarbeitungsgerätes zum Datenaustausch verbundenen Berührungsbildschirm (1) zur von dem Datenverarbeitungsprogramm gesteuerten Darstellung von auf der Oberfläche des Berührungsbildschirm (1) in fester Größe, Anordnung und Anzahl verteilten graphischen Schalt- und/oder Regelsymbolen (7, 8, 9), wie insbesondere Schalt- und/oder Regelknöpfen, Schiebereglern, Drehreglern und dergleichen, welche Schalt- und/oder Regelsymbole (7, 8, 9) durch Berühren des Berührungsbildschirmes (1) bedienbar sind, in Ihrer Verwendung für die Eingabe von Steuerbefehlen bei Erhalt der sich für Berührungsbildschirme ergebenden Flexibilität im Zusammenhang mit Datenverarbeitungsprogrammen komfortabel und praktikabel zu gestalten, wird vorgeschlagen, eine auf den Berührungsbildschirm (1) unverrückbar aufgelegte Maske (2) zu verwenden, welche den Berühungsbildschirm zumindest teilweise und in den Bereichen, in denen die Schalt- und/oder Regelsymbole (7, 8, 9) dargestellt sind, überdeckt und welche korrespondierend zu den Positionen und Größen der Schalt- und/oder Regelsymbole (7, 8, 9) Aussparungen (3, 4, 5) aufweist, durch die hindurch die Oberfläche des Berührungsbildschirmes (1) mit den dort dargestellten Schalt- und/oder Regelsymbolen (7, 8, 9) frei zugänglich ist.

## Beschreibung

Die vorliegende Erfindung betrifft eine Eingabeeinrichtung zur Eingabe von Steuerbefehlen für die Steuerung eines auf einem Datenverarbeitungsgerät ablaufenden Datenverarbeitungsprogrammes, insbesondere eines Audio-, Video- und/oder MIDI-Bearbeitungsprogrammes gemäß dem Oberbegriff des Patentanspruchs 1. Sie betrifft ferner eine Verwendung einer mit Aussparungen versehenen Maske zum Auflegen auf einen Berührungsbildschirm einer Eingabeeinrichtung und betrifft schließlich eine Kombination aus einem auf einem Datenträger gespeicherten oder über ein Computernetzwerk erhältlichen Datenverarbeitungsprogramm mit einer solchen Maske.

Berührungsbildschirme, auch als Touch-Display oder Touch-Screen bezeichnet, sind bereits seit geraumer Zeit bekannt. Diese zeichnen sich dadurch aus, dass sie nicht nur der Anzeige von Text oder Grafiksymbolen dienen können, sondern eine Einrichtung zur Wahrnehmung von Berührungen auf der Anzeigeoberfläche aufweisen, die wiederum ausgewertet und zur Abgabe von die Berührungen hinsichtlich des Ortes, einer Bewegung oder dgl. der repräsentierenden Signale verwendet wird. Waren derartige Anzeigeeinrichtungen zunächst vergleichsweise klein dimensioniert und hochpreisig, so sind in jüngster Vergangenheit immer großflächigere und zugleich kostengünstigere Berührungsbildschirme auf den Markt gekommen.

Entsprechend finden derartige Geräte bereits Verwendung als Bestandteil von Eingabeeinrichtungen zur Eingabe von Steuerbefehlen für Datenverarbeitungsprogramme, die auf Datenverarbeitungsgeräten ablaufen. Die Verwendung derartiger, Berührungsbildschirme enthaltender Einrichtungen hat den Vorteil, dass diese Eingabeeinrichtungen flexibel gestaltet und für unterschiedliche Bedürfnisse angepasst werden können. Sie erfüllen gleichermaßen die Möglichkeiten einer intuitiven Bedienbarkeit spezieller Eingabeeinrichtungen mit speziellen Schalt-und/oder Regelelementen (z.B. digitale Mischpulte für Programme für die Audio-, Video- oder MIDI-Bearbeitung, z.B. Musikbearbeitung, Musikwiedergabe und/oder Musikaufnahme), können aber je nach Anwendungsfall und durch einfache Verwendung anderer Datenverarbeitungsprogramme umgestaltet und insoweit universell verwendet werden. So kann ein und dieselbe Eingabeeinrichtung durch unterschiedliche Anzeige von Steuer- und Regelsymbolen, deren Bedienung durch Berühren des Berührungsbildschirmes auf den Positionen der entsprechenden graphischen Wiedergabe erfolgt, z.B. in unterschiedlichen Menüebenen eines Datenverarbeitungsprogrammes unterschiedlich ausgebildet und den entsprechenden Benutzungssituationen angepasst werden. Ebenso kann ein und dieselbe Eingabeeinrichtung zur Verwendung mit ganz unterschiedlichen Datenverarbeitungsprogrammen und verschiedenen Anforderungen an die jeweiligen Bedienelemente (Steuer- und/oder Regelsymbole bzw. -elemente) verwendet werden.

Allerdings bringt der enorme Vorteil der Universalität des Berührungsbildschirmes hinsichtlich seiner Verwendung im Zusammenhang mit einer Eingabeeinrichtung zugleich einen nicht unerheblichen Nachteil mit sich. Die Oberfläche des Berührungsbildschirms ist - und muss dies für eine universelle Anwendung auch sein - ohne jegliche spürbare Unterteilungen glatt und eben ausgebildet. Entsprechend ergeben sich für einen Bediener, der in einem bestimmten Ablauf eines Datenverarbeitungsprogrammes auf den Berührungsbildschirm abgebildete Symbole für Regel- bzw. Steuerungselemente bedienen möchte, keine haptischen Anhaltspunkte, er erhält keinerlei Rückmeldung, wenn er diese Symbole mit z.B. den Fingern einer Hand bedient. Dieser Umstand führt einerseits dazu, dass ein Nutzer der Eingabeeinrichtung sich beim Betätigen der darauf dargestellten graphischen Schalt- und/oder Regelsymbole nicht etwa blind auf das Gefühl seiner Finger, also seinen Tastsinn, verlassen und mit den Augen seine Aufmerksamkeit auf andere Geräte, z.B. einen gesonderten Anzeigebildschirm für durch die Bedienung der Eingabeeinrichtung erzielte Ergebnisse des Datenverarbeitungsgerätes lenken kann. Vielmehr muss der beim Bedienen der Eingabeeinrichtung stets diese im Blick behalten. Darüber hinaus besteht die Gefahr, dass eine Bedienperson beim Bedienen der graphischen Schalt- und/oder Regelsymbole mit seinen Fingern auf der Oberfläche des Berührungsbildschirmes derart verrutscht, dass er entweder versehentlich ein falsches graphisches Symbol berührt oder aber zwei Symbole gleichzeitig und es so zu ungewollten Fehlbedienungen kommt. Dieses Problem wird insbesondere dann verstärkt auftreten, wenn auf der Anzeigeoberfläche des Berührungsbildschirmes eine Vielzahl von Schalt- und/oder Regelsymbolen wiedergegeben sind, wie dies beispielsweise bei der Anzeige eines virtuellen Mischpultes oder Equalizers für die Bedienung eines Audio-, Video- oder MIDI-Bearbeitungsprogrammes, insbesondere eines Musikaufnahme-, Musikwiedergabe- und/oder Musikbearbeitungsprogrammes der Fall sein kann.

Die oben aufgezeigten Probleme zu überwinden und die Verwendung von Eingabereinrichtungen mit zur Eingabe von Steuerbefehlen daran vorgesehenen Berührungsbildschirmen zur Ausnutzung der oben beschriebenen Flexibilität im Zusammenhang mit Datenverarbeitungsprogrammen komfortabel und praktikabel zu gestalten, ist Aufgabe der vorliegenden Erfindung. Im Detail soll eine verbesserte Eingabeeinrichtung zur Eingabe von Steuerbefehlen für die Steuerung eines auf einem Datenverarbeitungsgerät ablaufenden Datenverarbeitungsprogrammes mit den Merkmalen des Oberbegriffs des Anspruchs 1 verbessert werden, es soll ein Mittel angegeben werden, mit dem ein Berührungsbildschirm einer Eingabeeinrichtung für die Verwendung im Zusammenhang mit der Steuerung von Datenverarbeitungsprogrammen verbessert werden kann, und es soll eine Kombinationslösung für bestimmte Datenverarbeitungsprogramme und einem Mittel zur Individualisierung und Verbesserung von Eingabegeräten mit Berührungsbildschirmen angegeben werden.

In den drei vorgegebenen Aspekten wird diese Aufgabe gelöst zunächst durch eine Eingabeeinrichtung mit den Merkmalen des Patentanspruchs 1, ferner durch die Verwendung einer mit Aussparungen versehenen Maske gemäß Patentanspruch 5 und schließlich durch eine Kombination aus einem Datenverarbeitungsprogramm und einer Maske, wie sie in Anspruch 6 angegeben ist. Vorteilhafte Ausgestaltungen der erfindungsgemäßen Eingabeeinrichtung sind in den Unteransprüchen 2 bis 4 beschrieben, solche der Kombination aus einem Datenverarbeitungsprogramm und einer Maske in den Unteransprüchen 7 bis 10.

Die wesentliche Idee der Erfindung besteht darin, den Berührungsbildschirm einer Eingabeeinrichtung angepasst auf eine Darstellung von Schalt- und/oder Regelsymbolen, wie sie von einem bestimmten Datenverarbeitungsprogramm, ggf. von diesem in einer bestimmten Menüebene, über dessen Steuerung auf den Berührungsbildschirm ausgegeben und zur Anzeige gebracht wird, individualisiert einzurichten, indem auf die Oberfläche des Berührungsbildschirms eine Maske aufgelegt wird, die jedenfalls weite Teile des Berührungsbildschirmes überdeckt und hinsichtlich ihrer Größe, Anzahl und Verteilung an die Anzahl, Größe und Verteilung der dargestellten Schalt- und/oder Regelsymbole angepasste Aussparungen aufweist. Durch diese Aussparungen hindurch kann eine Bedienperson auf die Oberfläche des Berührungsbildschirmes fassen und dort z.B. mit einem oder mehreren Fingern die jeweiligen Symbole berühren, z.B. virtuelle Regler verschieben, virtuelle Schalter umlegen, virtuelle Taster bedienen, virtuelle Drehschalter verdrehen und dgl. Die Maske sollte dabei so gestaltet und ausgebildet sein, dass sie eine für den Tastsinn des Bedieners erkennbar unterschiedliche Haptik aufweist, so dass er zwischen der in den Aussparungen der Maske liegenden, die zu bedienenden Schalt- und/oder Regelsymbole anzeigenden Bereiche der Oberfläche des Berührungsbildschirms und der Oberfläche der Maske unterscheiden kann. Diese haptische Unterscheidbarkeit kann z.B. durch eine andere Art der Oberflächenbeschaffenheit die Maske gegenüber derjenigen des Berührungsbildschirms erzielt werden. Sind die Oberflächen der Berührungsbildschirme typischerweise sehr glatt, so kann im Kontrast hierzu z.B. eine Oberfläche der Maske gewählt werden, die eine spürbar erhöhte Rauhigkeit aufweist. Alternativ ist es möglich, die Maske hinsichtlich ihrer Materialstärke so auszubilden, dass für die den Berührungsbildschirm bedienenden Finger einer Bedienperson ein spürbarer Absatz gegeben ist. Wegen der hohen Sensibilität des Tastsinnes genügen hier Höhendifferenzen und damit eine Materialstärke der Maske im Bereich von Bruchteilen eines Millimeters. Wenn zugleich eine sichere Führung der bedienenden Finger in den Aussparungen und damit in den Bereich der dort wiedergegebenen Schalt- und/oder Regelsymbole erzielt werden soll, sind Materialstärken der Maske im Bereich von einigen Millimetern (typischerweise 3 bis 5 mm) zu bevorzugen. Um weitere Anzeigen auf dem Berührungsbildschirm (z.B. Beschriftungen der jeweiligen Schalt- und/oder Regelsymbole, Textfelder, Zahlenanzeigefelder oder dgl. trotz der auf den Berührungsbildschirm aufgelegten Maske sichtbar zu halten, kann die Maske bevorzugt aus einem transparenten Material bestehen. Als Material für die Maske wird insbesondere Kunststoff bevorzugt, da dieser eine kostengünstige und flexible Herstellung einer solchen Maske erlaubt und aufgrund vielfältigster und unterschiedlichster Herstellungstechniken eine weiter Spanne an haptischen Gestaltungsmöglichkeiten eröffnet. Um Anzeigen des Berührungsbildschirmes jenseits der Schalt- und/oder Regelsymbole zu ermöglichen können alternativ zu einer transparenten Ausgestaltung der Maske oder auch zusätzlich dazu auch weitere Aussparungen in der Maske vorgesehen sein, die bei auf dem Berührungsbildschirm aufgelegter Maske den Bildschirm im Bereich einer solchen Anzeige unbedeckt belassen.

Insbesondere ist es von Vorteil, wenn die Maske auf dem Berührungsbildschirm lösbar und auswechselbar aufgelegt und an diesem befestigt ist. Eine solche lösbare Anordnung der Maske auf dem Berührungsbildschirm erlaubt eine auswechselbare Anbringung unterschiedlicher Masken zur Anpassung der Eingabeeinrichtung, genauer ihres Berührungsbildschirms, an unterschiedliche von verschiedenen Datenverarbeitungsprogrammen oder von ein und denselben Datenverarbeitungsprogrammen in unterschiedlichen Menüebenen oder unterschiedlichen Funktionen ausgegebene Anordnungen und Verteilungen von schematischen Schalt-und/oder Regelsymbolen. Auch kann die Eingabeeinrichtung mit ihrem Berührungsbildschirm dann ohne irgendeine Maske verwendet werden, wenn eine solche Verwendung gewünscht ist. Eine einfache Möglichkeit der auswechselbaren Befestigung der Maske auf dem Berührungsbildschirm, die zugleich für eine zuverlässige positionsfeste Anordnung, die für eine lagegenaue Überdeckung der Aussparungen mit den graphischen Schalt- und/oder Regelsymbolen erforderlich ist, ist gegeben, wenn die Maske mit flexiblen Clipsvorrichtungen versehen ist. Mit solchen Clipsvorrichtungen kann die Maske beispielsweise an den Ecken eines flach ausgebildeten Berührungsbildschirmes diesen hintergreifen und somit in Position gehalten werden.

Im Rahmen der Erfindung bietet es sich insbesondere an, Datenverarbeitungsprogramme, die zum Ablauf auf Datenverarbeitungsgeräten mit mit einem Berührungsbildschirm ausgerüsteten Eingabeeinrichtungen allgemeiner Art vorgesehen sind in Kombination mit entsprechenden, an die Struktur und Anordnung von mit dem Datenverarbeitungsprogramm jeweils ausgegeben, auf dem Berührungsbildschirm anzuzeigenden graphischen Schalt- und/oder Regelsymbolen angepassten Aussparungen zu verbinden und anzubieten. In dieser Kombination kann mithin ein allgemein gehaltenes und prinzipiell für den Ablauf unterschiedlichster Datenverarbeitungsprogramme eingerichtetes Datenverarbeitungsgerät für den Betrieb mit dem speziellen Datenverarbeitungsprogramm individualisiert werden.

Weitere Vorteile und Merkmale ergeben sich aus der nachfolgenden Beschreibung erfindungsgemäßer Ausführungsbeispiele anhand der beigefügten Figuren. Dabei zeigen:
- Fig. 1: ein erstes Ausführungsbeispiel für eine auf einen Berührungsbildschirm mit darauf wiedergegebener Darstellung von Schalt- und Regelsymbolen aufzulegende und daran festzulegende Maske in einer explosionsartigen Darstellung über dem Berührungsbildschirm;
- Fig. 2: eine mit Fig. 1 vergleichbare Darstellung dieses Ausführungsbeispiels mit vollständig auf dem Berührungsbildschirm aufgelegter Maske;
- Fig. 3: den Berührungsbildschirm aus Fig. 1 bzw. 2 mit anderer Darstellung von Schalt- und/oder Regelsymbolen und einer entsprechend diesem zweiten Ausführungsbeispiel angepasst mit Aussparungen versehenen alternativen Maske;
- Fig. 4: in einer schräg von oben hergegebenen Seitendarstellung schematisch die Bedienung eines Schiebereglers mit der durch die Maske gemäß dem Ausführungsbeispiel nach Fig. 1 erhaltenen Führung; und
- Fig. 5: Situation gemäß Fig. 4 in einer Darstellung von der Seite.

In den Figuren ist anhand von zwei unterschiedlich gestalteten Ausführungsbeispielen und in verschiedenen Ansichten die Erfindung exemplarisch dargestellt. Diese Ausführungsbeispiele und die Figuren werden nachfolgend erläutert.

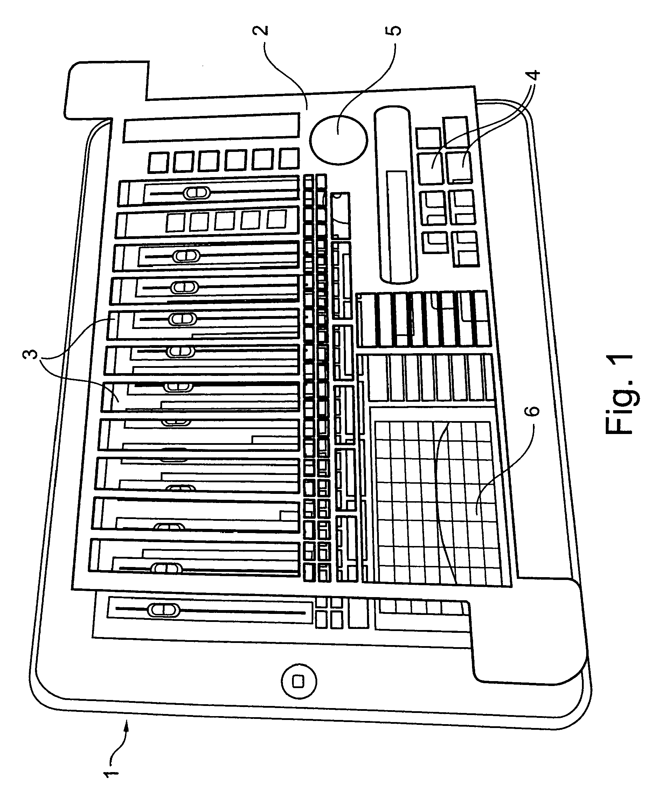

In den Figuren 1, 2 und 4 sowie 5 ist in verschiedenen Ansichten ein erstes Ausführungsbeispiel gezeigt, bei dem auf einem Berührungsbildschirm verschiedene Schalt- und/oder Regelsymbole in bestimmter und fest vorgegebener Anordnung, Größe und Anzahl angezeigt sind. Diese Anzeige erfolgt aufgrund von in einem hier nicht näher dargestellten Datenverarbeitungsgerät, welches mit dem Berührungsbildschirm 1 verbunden ist, ablaufenden Datenverarbeitungsprogrammes. Der Berührungsbildschirm 1 ist hier als eine integrale Einheit mit einem Prozessor dargestellt, welcher aus den von dem Berührungsbildschirm aufgenommenen Daten hinsichtlich der Position einer Berührung durch eine Bedienperson Steuer- bzw. Regelbefehle generieren kann. Zwischen diesem Prozessor in dem Berührungsbildschirm 1 und dem hier nicht näher dargestellten Datenverarbeitungsgerät besteht eine Datenverbindung. Insoweit bildet der Berührungsbildschirm 1 hier mit dem integral darin enthaltenen Prozessor insgesamt eine Eingabeeinrichtung, mit welcher Steuerbefehle für die Steuerung des auf dem Datenverarbeitungsgerät ablaufenden Datenverarbeitungsprogrammes erzeugt und an das Datenverarbeitungsgerät übermittelt werden.

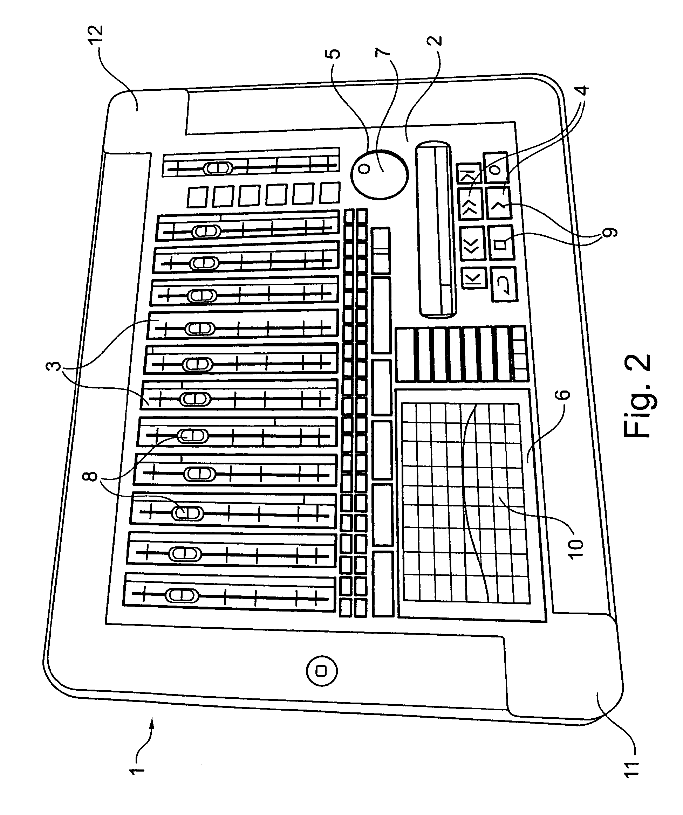

In Fig. 1 in einer nach Art einer Explosionsdarstellung von dem Berührungsbildschirm 1 abgehobenen Darstellung, in Fig. 2 in der fest auf dem Berührungsbildschirm aufgelegten und mit diesem positionssicher verbundenen Stellung ist eine Maske 2 gezeigt, die im Wesentlichen eben bzw. flächig gebildet ist, in diesem Ausführungsbeispiel aus einem Kunststoff. Die Maske 2 weist eine Vielzahl von Aussparungen 3, 4, 5, 6 auf, die in ihrer Positionierung und Größe mit bestimmten Bereichen der durch das Datenverarbeitungsprogramm erzeugten Anzeige auf dem Berührungsbildschirm 1 korrelieren. Besonders in Fig. 2 ist gut zu erkennen, dass die langgestreckten Aussparungen 3 im oberen Bereich der Maske 2 über virtuellen, auf dem Berührungsbildschirm 2 angezeigten Schiebereglern 8 so zu liegen kommen, dass die einzelnen Schieberegler 8 durch zwischen den Aussparungen 3 verlaufende Stege der Maske 2 voneinander getrennt sind. Die Aussparungen 4 liegen über virtuellen Tasterschaltern 9, die Abspiel-, Spul-, Such- und Aufnahmetasterschalter z.B. eines Musikwiedergabe- bzw. -aufnahmegerätes symbolisieren. Eine kreisrunde Aussparung 5 lässt einen Bereich des Berührungsbildschirmes 1 zugänglich, in dem ein virtueller Drehregler 7 dargestellt ist. Die Aussparung 6 schließlich lässt eine Anzeige 10 auf dem Berührungsbildschirm frei. Weitere, hier nicht näher bezifferte Aussparungen liegen über anderen, auf dem Berührungsbildschirm 1 angeordneten Anzeigefeldern.

In der in diesem Ausführungsbeispiel gezeigten Konstellation wird der Berührungsbildschirm 1 mit seinem integrierten Prozessor als Eingabeeinrichtung zur Eingabe von Steuerbefehlen für die Steuerung eines auf dem Datenverarbeitungsgerät ablaufenden Audio-, Video- oder MIDI-Bearbeitungsprogrammes eingesetzt. Entsprechend bilden die Schieberegler 8 beispielsweise nach Frequenzen aufgeteilte Dämpfungs- bzw. Verstärkerregler nach Art eines Equalizers. Der Drehregler 7 kann ein Lautstärkeregler sein, ein Zeitlaufregler oder dgl. Die Anzeige 10 z.B. kann als Anzeige zum zeitlichen Frequenzverlauf ausgebildet sein, weitere Anzeigen können die verstrichene Zeit bedeuten oder Erläuterungen zu den einzelnen Schalt- und/oder Regelsymbolen enthalten.

In Fig. 2 weiterhin zu erkennen ist, dass die Maske 2 an zwei diagonal einander gegenüberliegenden Ecken 11 und 12 bis an den Rand des Berührungsbildschirms 1, der hier als flache Einheit gebildet ist, geführt sind. An diesen Ecken 11, 12 weist die Maske 2 den Berührungsbildschirm 1 bis auf seiner Rückseite hintergreifende Clipselemente (hier nicht näher dargestellt) auf, mit denen die Maske 2 fest auf der Oberfläche des Berührungsbildschirmes positioniert und gehalten wird.

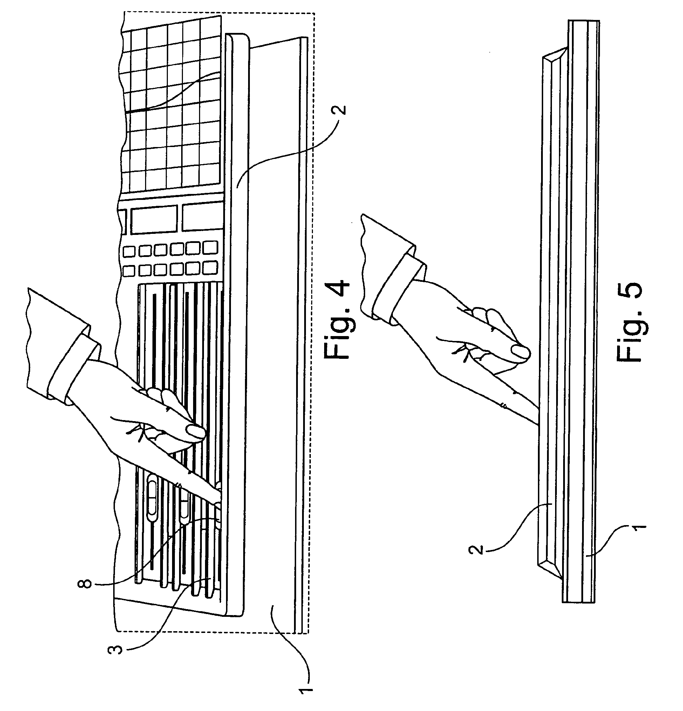

Die Maske 2 ist bevorzugt aus einem Kunststoffmaterial bestehend und mit einer eine andere Haptik als die Oberfläche des Berührungsbildschirmes 2 aufweisenden Oberfläche ausgestattet. Darüber hinaus weist die Maske 2 eine Materialstärke im Bereich einiger Millimeter (etwa 3 mm) auf, um für die Bedienperson die einzelnen Aussparungen, insbesondere diejenigen für die darunter liegenden virtuellen Schalt- und/oder Regelsymbole taktil erfahrbar zu machen. Diese Materialstärke der Maske 2 und die prinzipielle Bedienung der in den Aussparungen zugänglichen Schalt- und/oder Regelsymbole ist in den Figuren 4 und 5 veranschaulicht. Dort ist symbolisch gezeigt, wie eine Bedienperson mit ihrer Hand z.B. einen der Schiebregler 8 in der Aussparung 3 ergreift und bewegt. Durch die diese Aussparung umgebend erhabene Begrenzung in Form der Maske 2 wird die Bedienperson auf der ansonsten insgesamt glatten Oberfläche des Berührungsbildschirmes 1 geführt, sie erhält eine taktile Rückmeldung und kann auch ohne hinzuschauen den Schieberegler 1 sicher auf- bzw. abwärts bewegen, ohne etwa von diesem abzugleiten zu einem weiteren Regler oder aber gleich zwei Regler auf einmal zu bewegen.

So ist mit der Maske 2 aufgrund ihrer speziellen, auf die durch das Datenverarbeitungsprogramm vorgegebene Darstellung der verschiedenen virtuellen Schalter und Regler mit ihren Aussparungen angepasste Maske auf einfache Weise durch Anbringen derselben die Eingabeeinrichtung mit dem Berührungsbildschirm 1 für die Bedienung dieses Datenverarbeitungsprogrammes individualisiert und zu einer spürbar strukturierten und die Bedienung vereinfachenden, individuellen Eingabeeinrichtung umgerüstet.

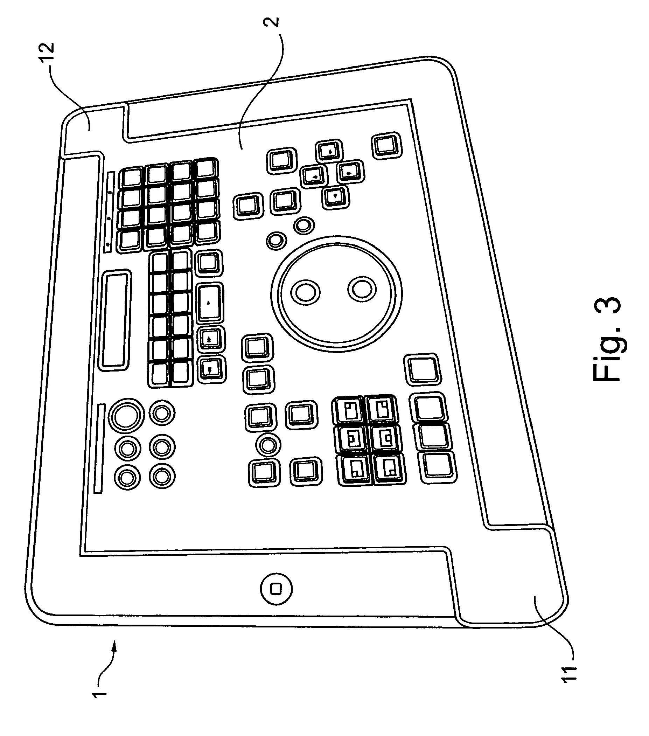

In Fig. 3 ist zum Vergleich eine andere Ausformung der Maske 2 gezeigt mit anders geformten und angeordneten Aussparungen entsprechend einer anders gearteten Wiedergabe von graphischen Schalt- und/oder Regelsymbolen auf dem Berührungsbildschirm 1, wie dieses z.B. durch ein anderes Datenverarbeitungsprogramm hervorgerufen wird. Um den prinzipiell universell einsetzbaren Berührungsbildschirm 1 bzw. die Eingabeeinrichtung zum Bedienen eines anderen Datenverarbeitungsprogrammes oder aber einer anderen Menüebene oder Funktion ein und desselben Datenverarbeitungsprogrammes umzurüsten, ist es gemäß der Erfindung nur erforderlich, die in den gezeigten Ausführungsbeispielen an den Ecken 11 und 12 mit dem Berührungsbildschirm durch Clipselemente verbundene Maske 2 auszutauschen und die den jeweiligen Ansprüchen entsprechende bzw. an die jeweilige Software angepasste, mit entsprechenden Aussparungen versehene Maske zu verwenden.

Es dürfte auf der Hand liegen, dass es sich anbietet, entsprechende Datenverarbeitungsprogramme, die eine Eingabe von Steuerbefehlen über mit Berührungsbildschirmen ausgestattete Eingabeeinrichtungen vorsehen im Paket mit der für die durch dieses Datenverarbeitungsprogramm ausgegebene Anordnung und Anzahl von Schalt- und/oder Regelsymbolen entsprechend ausgerüsteten Masken im Paket zu vertreiben.

### Bezugszeichenliste

- 1: Berührungsbildschirm
- 2: Maske
- 3: Aussparung
- 4: Aussparung
- 5: Aussparung
- 6: Aussparung
- 7: virtueller Drehregler
- 8: virtueller Schieberegler
- 9: virtueller Tasterschalter
- 10: Anzeige
- 11: Ecke
- 12: Ecke

## Patentansprüche

1. Eingabeeinrichtung zur Eingabe von Steuerbefehlen für die Steuerung eines auf einem Datenverarbeitungsgerät ablaufenden Datenverarbeitungsprogrammes, insbesondere eines Audio-, Video- und/oder MIDI-Bearbeitungsprogrammes, mit einem von einem Prozessor des Datenverarbeitungsgerätes zum Datenaustausch verbundenen Berührungsbildschirm (1) zur von dem Datenverarbeitungsprogramm gesteuerten Darstellung von auf der Oberfläche des Berührungsbildschirm (1) in fester Größe, Anordnung und Anzahl verteilten graphischen Schalt- und/oder Regelsymbolen (7, 8, 9), wie insbesondere Schalt- und/oder Regelknöpfen, Schiebereglern, Drehreglern und dergleichen, welche Schalt- und/oder Regelsymbole (7, 8, 9) durch Berühren des Berührungsbildschirmes (1) bedienbar sind, **gekennzeichnet durch** eine auf den Berührungsbildschirm (1) unverrückbar aufgelegte Maske (2), welche letzteren zumindest teilweise und in den Bereichen, in denen die Schalt- und/oder Regelsymbole (7, 8, 9) dargestellt sind, überdeckt und welche korrespondierend zu den Positionen und Größen der Schalt- und/oder Regelsymbole (7, 8, 9) Aussparungen (3, 4, 5) aufweist, **durch** die hindurch die Oberfläche des Berührungsbildschirmes (1) mit den dort dargestellten Schalt- und/oder Regelsymbolen (7, 8, 9) frei zugänglich ist.

2. Eingabeeinrichtung nach Anspruch 1, **dadurch gekennzeichnet, dass** die Maske (2) auf dem Berührungsbildschirm lösbar und insbesondere auswechselbar aufgelegt und befestigt ist.

3. Eingabeeinrichtung nach einem der vorhergehenden Ansprüche, **dadurch gekennzeichnet, dass** die Maske (2) eine solche Materialstärke aufweist, dass die Finger einer Bedienperson beim Bedienen des Berührungsbildschirmes (1) in den Aussparungen (3, 4, 5) geführt bzw. gehalten sind.

4. Eingabeeinrichtung nach einem der vorhergehenden Ansprüche, **dadurch gekennzeichnet, dass** die Maske (2) aus einem transparenten Material, insbesondere einem transparenten Kunststoff besteht.

5. Verwendung einer mit Aussparungen (3, 4, 5) versehenen Maske (2) zum Auflegen auf einen Berührungsbildschirm (1) einer Eingabeeinrichtung zur Eingabe von Steuerbefehlen für die Steuerung eines auf einem Datenverarbeitungsgerät, an welches der Berührungsbildschirm (1) zum Datenaustausch und zur Anzeige von in fester Größe, Anordnung und Anzahl verteilten graphischen Schalt- und/oder Regelsymbolen (7, 8, 9), wie insbesondere Schalt- und/oder Regelknöpfen, Schiebereglern, Drehreglern und dergleichen, welche Schalt- und/oder Regelsymbole (7, 8, 9) durch Berühren des Berührungsbildschirmes (1) bedienbar sind, angeschlossen ist, ablaufenden Datenverarbeitungsprogrammes, insbesondere eines Audio-, Video-und/oder MIDI-Bearbeitungsprogrammes, wobei die Aussparungen (3, 4, 5) in ihrer Größe, Anordnung und Anzahl der Anordnung und Anzahl der auf dem Berührungsbildschirm (1) angezeigten Schalt- und/oder Regelsymbolen (7, 8, 9) entsprechen.

6. Kombination aus einem auf einem Datenträger gespeicherten oder über ein Computernetzwerk erhältlichen Datenverarbeitungsprogramm mit Programmteilen zur Anzeige von graphischen Schalt- und/oder Regelsymbolen (7, 8, 9) wie insbesondere Schalt- und/oder Regelknöpfen, Schiebereglern, Drehreglern und dergleichen, in wenigstens einer vorgegebenen Anzahl, Anordnung und größenmäßigen Ausgestaltung auf einem Berührungsbildschirm (1) sowie mit Programmteilen zur Umsetzung von Bedienberührungen der Schalt- und/oder Regelsymbole (7, 8, 9) auf dem Berührungsbildschirm (1) in Schalt- und/oder Steuerbefehle, und wenigstens einer auf den Berührungsbildschirm (1) auflegbaren, mit diesem positionsfest verbindbaren Maske (2), welche den Berührungsbildschirm (1) wenigstens teilweise und in den Bereichen, innerhalb derer die Schalt- und/oder Regelsymbole (7, 8, 9) angeordnet sind, überdeckt und die entsprechend der Anzahl, Anordnung und Größe der Schalt- und/oder Regelsymbole (7, 8, 9) Aussparungen (3, 4, 5) aufweist, durch welche hindurch bei auf dem Berührungsbildschirm (1) aufgelegter Maske (2) dessen Oberfläche mit den dort dargestellten Schalt-und/oder Regelsymbolen (7, 8, 9) frei zugänglich ist.

7. Kombination nach Anspruch 6, **dadurch gekennzeichnet, dass** das Datenverarbeitungsprogramm Programmteile zum Anzeigen von wenigstens zwei unterschiedlichen Anordnungen von Schalt- und/oder Regelsymbolen (7, 8, 9) aufweist und dass wenigstens zwei entsprechend der unterschiedlichen Anordnungen von Schalt- und/oder Regelsymbolen (7, 8, 9) mit unterschiedlich und auf die jeweilige Anordnung von Schalt- und/oder Regelsymbolen (7, 8, 9) angepasst angeordneten Aussparungen (3, 4, 5) vorhanden sind.

8. Kombination nach einem der Ansprüche 6 oder 7, **dadurch gekennzeichnet, dass** die Maske(n) (2) eine solche Materialstärke aufweist bzw. aufweisen, dass die Finger einer Bedienperson beim Bedienen des Berührungsbildschirmes (1) in den Aussparungen (3, 4, 5) geführt bzw. gehalten sind.

9. Kombination nach einem der Ansprüche 6 bis 8, **dadurch gekennzeichnet, dass** die Maske(n) (2) aus einem transparenten Material, insbesondere einem transparenten Kunststoff besteht bzw. bestehen.

10. Kombination nach einem der Ansprüche 6 bis 9, **dadurch gekennzeichnet, dass** das Datenverarbeitungsprogramm ein Audio-, Video- und/oder MIDI-Bearbeitungsprogramm ist.
